# EUROPÄISCHE PATENTANMELDUNG

(11) **EP 1 529 624 A1**
(43) Veröffentlichungstag der Anmeldung: **11.05.2005**
(21) Anmeldenummer: 03025628.3
(22) Anmeldetag: 06.11.2003
(51) Int. Cl.: B29C 65/06, F16L 55/162

(54) **Vorrichtung zum Verschweissen von thermoplastischen Rohrelementen**

(71) Anmelder: Weber, Joachim, Dr., 81543 München (DE); Förster, Dirk, 04425 Taucha (DE)
(72) Erfinder: Weber, Joachim, Dr., 81543 München (DE); Förster, Dirk, 04425 Taucha (DE)
(74) Vertreter: Weber, Joachim, Dr.

(57) **Zusammenfassung**

Die Erfindung bezieht sich auf eine Vorrichtung zum Verschweißen von thermoplastischen Rohrelementen (1,2) mittels eines Reibschweißverfahrens, mit einem innerhalb eines Rohres verfahrbaren Rohrroboter (24) mit einer Antriebseinheit für einen Reibschweißdorn, mit einer Steuereinheit zur Bewegung des Reibschweißdorns (3) entlang einer Innenwandung eines Rohrs sowie mit einer Anpresseinrichtung (4) zur Anlage des Reibschweißdorns (3) an die zu verschweißende Rohrwandung.

## Beschreibung

Die Erfindung bezieht sich auf eine Vorrichtung zum Verschweißen von Rohrelementen aus thermoplastischen Kunststoffen.

Rohrelemente der genannten Art werden insbesondere bei der Sanierung von schadhaften Kanalisationsleitungen verwendet. Dabei werden die Rohrelemente oder Rohrmodule ohne Freilegen der Kanalisationsleitungen in diese eingepresst bzw. eingezogen. Diese Verfahren werden auch als Relining-Verfahren bezeichnet. Hierdurch ist es möglich, aufwendige Erdarbeiten zu vermeiden. Es ist lediglich erforderlich, an einer Stelle einen Schacht zu graben, durch den die Rohrelemente oder Rohrmodule in den vorhandenen, gemauerten oder aus Elementen anderer Art bestehenden, schadhaften Kanal, einzuführen.

In ähnlicher Weise werden auch in einen Kanal einmündende Hausanschlüsse saniert. Hierbei wird ein Schlauch oder Hütchen durch den zuvor mittels eines Roboters ausgefrästen Zugang zu dem Hausanschluss eingesetzt und entsprechend mit dem Rohrelement verbunden.

Es sind auch bereits Vorschläge zum Verkleben von Muffenverbindungen von Polyäthylen-Rohren gemacht worden, beispielsweise in der deutschen Patentschrift 10 12 013. Das dort beschriebene Klebematerial hat sich in der Praxis aus unterschiedlichsten Gründen nicht durchsetzen können.

Die übliche, beim Stand der Technik verwendete Vorgehensweise liegt darin, die einzelnen Rohrelemente mechanisch aneinander zu verrasten, wobei zusätzliche Dichtungsringe oder Ähnliches eingelegt werden können. Diese Vorgehensweise ist mit relativ hohen Kosten verbunden, da die Herstellung der einzelnen Rohrelemente, insbesondere deren Verrastungsbereiche, sehr aufwendig ist. Rohrelemente der beschriebenen Art werden üblicherweise extrudiert oder nach sonstigen Rohrherstellungsverfahren gefertigt. Somit müssen die Verbindungselemente in separaten Arbeitsgängen hergestellt werden.

Zum Anschluss von Hauselementen ist es bekannt, eine Verschweißung durch Heizleiterwendel zu realisieren. Die Heizleiterwendeln sind üblicherweise in die Verbindungsbereiche eingeklebt oder dort vormontiert. Zum Einsetzen der Rohrelemente ist es erforderlich, diese auf Rohrroboter aufzusetzen, an die gewünschte Stelle zu verfahren und anschließend solange zu beheizen, bis der Schweißvorgang beendet ist. Als besonders nachteilig erweist es sich, dass hohe elektrische Leistungen über einen längeren Zeitraum erforderlich sind, wo insbesondere der elektrische Anschluss und die Kontaktierung der Heizleiterwendel technisch aufwendig und anspruchsvoll ist. Diese Vorgehensweise ist beispielsweise in der EP 674 131 B1 beschrieben.

Zum Verschweißen von thermoplastischen Bauteilen zeigt die US 5,460,317 A, dass im Fügebereich thermoplastischer Werkstücke mittels eines Reibschweißdorns ein ausreichender Energieeintrag erzielt werden kann, um die Randbereiche zu verschweißen.

Der Erfindung liegt die Aufgabe zu Grunde, eine Vorrichtung sowie ein Verfahren der eingangs genannten Art zu schaffen, welche bei einfacher, kostengünstiger Umsetzbarkeit die Verweißung von thermoplastischen Kunststoffrohren zu ermöglichen.

Erfindungsgemäß wird die Aufgabe durch die Merkmale des Hauptanspruchs bzw. des nebengeordneten Anspruchs gelöst, die jeweiligen Unteransprüche zeigen weitere vorteilhafte Ausgestaltungen der Erfindung.

Die Erfindung zeichnet sich durch eine Reihe erheblicher Vorteile aus. Zum Verschweißen von thermoplastischen Rohren, insbesondere PE-Rohren, kann auf einfachste Weise ein üblicher, zur Sanierung von Rohren vorhandener Rohrroboter eingesetzt werden. Dieser wird mit einem entsprechenden Arbeitsaufsatz versehen, der die Antriebseinheit, die Steuereinheit sowie entsprechende Manipulationsvorrichtungen umfasst. Somit ist es möglich, den Rohrroboter an beliebigen Stellen innerhalb des Rohres zu verfahren, dort den Reibschweißdorn in Drehung zu versetzen und an der zurverschwei-ßenden Schweißnaht zu positionieren. Insbesondere beim Stumpf-Verschweißen von Rohren oder Rohrelementen bedarf es nur einfacher Steuerungsmechanismen, die entweder elektronisch mittels Stellmotoren oder mechanisch mittels Bahnkurven oder ähnlichem realisiert werden können.

Der wesentliche Vorteil der erfindungsgemäßen Vorrichtung besteht darin, dass keine zusätzliche Energie eingebracht werden muss, wie etwa elektrische Energie bei elektrischen Schweißmuffen. Somit kann der Rohrroboter den Reibschweißvorgang auch mit einem pneumatischen oder hydraulischen Antrieb realisieren. Hierdurch vereinfacht sich die gesamte Handhabung. Weiterhin können explosionsgeschützte Vorrichtungen verwendet werden.

Durch die Verwendung des erfindungsgemäßen Reibschweißverfahrens, welches aus der Verwendung der erfindungsgemäßen Vorrichtung resultiert, kann der Energieeintrag exakt in Abhängigkeit von den jeweiligen Gegebenheiten gesteuert werden. Hierzu kann der Reibschweißdorn entsprechend dimensioniert werden. Weiterhin ist es möglich, seine Drehgeschwindigkeit sowie die Vorschubgeschwindigkeit entsprechend anzupassen.

Der Einsatz des Reibschweißdorns ist auch im Wesentlichen unabhängig von äußeren Einflüssen, sodass Feuchtigkeit, insbesondere höhere Luftfeuchtigkeit oder Ähnliches, den Schweißvorgang nicht beeinträchtigen.

In besonders günstiger Ausgestaltung der Erfindung ist vorgesehen, dass der Reibschweißdorn einen drehbar gelagerten Trägerdorn mit einem Führungszapfen umfasst. Der Führungs-zapfen kann so dimensioniert werden, dass er innerhalb der Trennfuge der zu verbindenden Rohrelemente geführt wird und somit die Bewegungsbahn des Reibschweißdorns automatisch steuert.

Um einen ausreichenden Anpressdruck des Reibschweißdorns gegen die zu verschweißenden Rohrwandungen sicherzustellen, kann dieser mittels einer Kolben-Zylinder-Einheit vorgespannt sein. Eine Vorspannung ist auch über eine Federeinheit oder durch andere Maßnahmen möglich. Besonders günstig ist es, wenn der Reibschweißdorn an einer Führungseinheit gelagert ist, welche mit Eingriffselementen versehen ist, welche mit einem Flanschbereich des jeweiligen Rohrelements in Eingriff bringbar sind. Hierdurch wird die Bewegung des Reibschweißdorns entlang der Trennfuge weiter vereinfacht bzw. sichergestellt.

Im Folgenden wird die Erfindung anhand von Ausführungsbeispielen in Verbindung mit der Zeichnung beschrieben. Dabei zeigt:
- Fig. 1: eine schematische Darstellung der Funktionsweise des Reibschweißdorns,
- Fig. 2: eine Seitenansicht, teils im Schnitt, der in Fig. 1 gezeigten Anordnung,
- Fig. 3: eine Draufsicht auf die in Fig. 1 gezeigte Anordnung,
- Fig. 4-6: unterschiedliche Ausgestaltungen des Führungszapfens,
- Fig. 7: eine schematische Teil-Schnittansicht einer Anpresseinheit für den Reibschweißdorn,
- Fig. 8: eine weitere Ausgestaltung einer Anpresseinheit für den Reibschweißdorn,
- Fig. 9: eine Seltenansicht einer erfindungsgemäßen Führungseinheit,
- Fig. 10: eine Teil-Seitenansicht eines weiteren Ausführungsbeispiels einer Führungseinheit,
- Fig. 11-13: Seiten-Schnittansichten, in welchen der Arbeitsablauf dargestellt ist,
- Fig. 14: eine schematische Seiten-Schnittansicht eines Ausführungsbeispiels eines Rohrroboters mit der erfindungsgemäßen Vorrichtung, und
- Fig. 15: eine vereinfachte Teil-Schnittansicht eines Hausanschlusses zur Verschweißung mit der erfindungsgemäßen Vorrichtung.

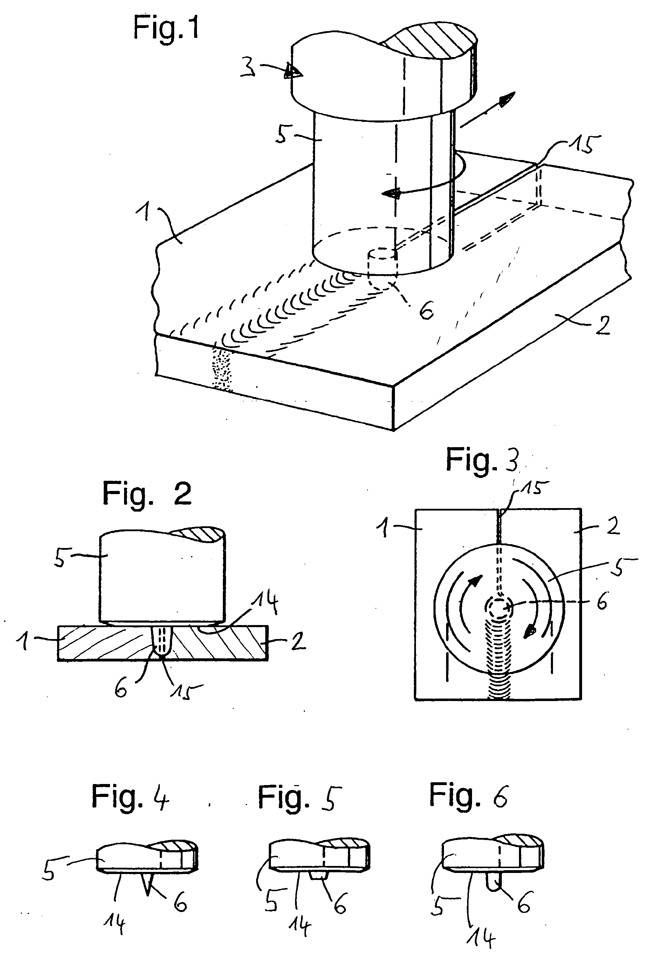

Die Fig. 1 zeigt in perspektivischer Darstellung Teile von Rohrelementen 1, 2 sowie einen drehbar gelagerten Reibschweißdorn 3, welcher einen Trägerdorn 5 aufweist, von dessen ebener Stirnfläche 14 aus sich ein Führungszapfen 6 erstreckt, der längs einer Fuge 15 zwischen den zu verbindenden Rohrelementen 1, 2 bewegbar ist. Durch die Reibung des Führungszapfens 6 sowie der Stirnfläche 14 des Trägerdorns 3 erfolgt ein Energieeintrag beim Vorschub bzw. bei der Drehung des Reibschweißdorns 3.

Die Fig. 2 und 3 zeigen eine Seiten-Ansicht bzw. eine Draufsicht der in Fig. 1 gezeigten Anordnung.

Aus den Fig. 4 bis 6 ergeben sich unterschiedliche Formen des Führungszapfens 6.

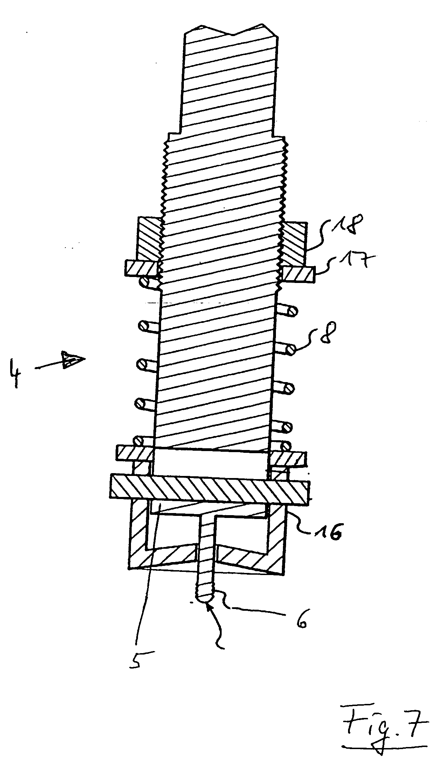

Die Fig. 7 zeigt eine Anpresseinrichtung 4, bei welcher eine Halterung 16 für den Trägerdorn 5 bzw. den Führungszapfen 6 mittels einer Federeinheit 8 vorspannbar ist. Mittels einer Mutter 18 und eines Widerlagers 17 ist die Vorspannkraft der Federeinheit 8 einstellbar.

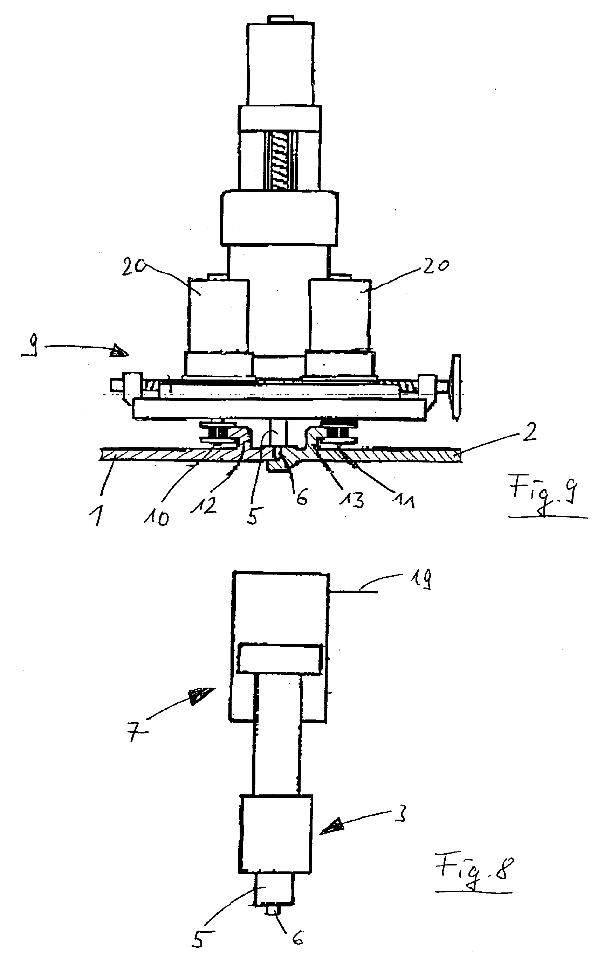

Eine weitere Ausgestaltung der Anpresseinheit 4 ergibt sich aus Fig. 8. Dort ist der Träger 5 mittels einer Kolben-Zylinder-Einheit 7 vorspannbar, welche über eine Leitung 19 mit Pressluft oder Hydraulikfluid beaufschlagt werden kann.

Es versteht sich, dass die Abbildungen 7 und 8 die drehbare Lagerung sowie den Antrieb des Reibschweißdorns 3 nicht im Einzelnen darstellen.

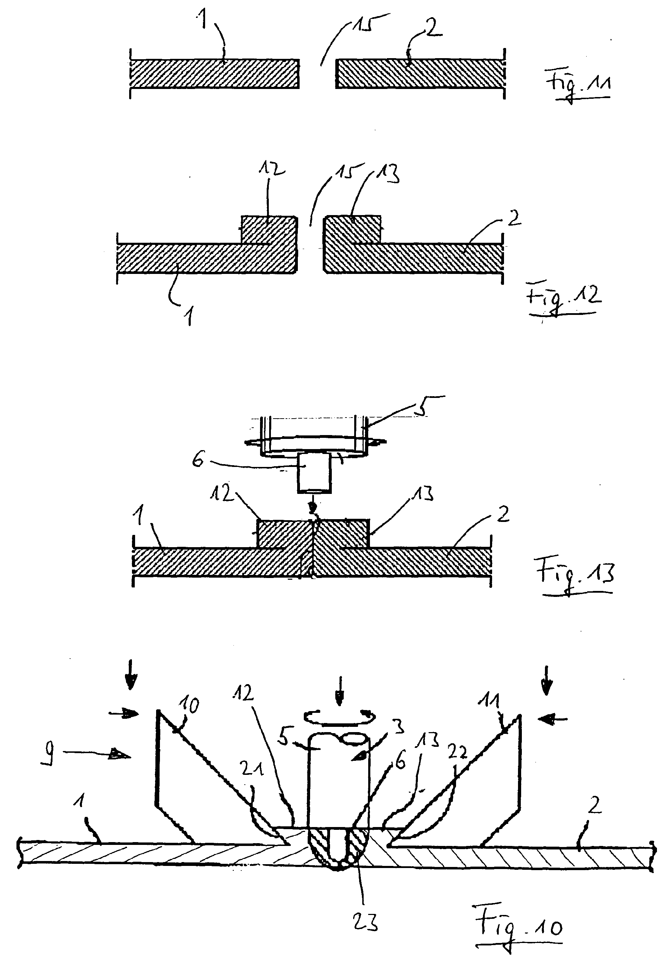

Die Fig. 9 und 10 zeigen jeweils Ausgestaltungsformen von Randbereichen der Rohrelemente 1, 2. Diese sind jeweils als Flanschbereiche 12, 13 ausgebildet und so ausgestaltet, dass Eingriffselemente 10, 11 lösbar in Eingriff bringbar sind.

Bei dem Ausführungsbeispiel der Fig. 9 sind die Eingriffselemente 10, 11 in Form von Rollen ausgebildet, die an Schlitten 20 gelagert sind, die relativ zu einem Träger verstellt werden können. Somit ist es möglich, die Flanschbereiche 12, 13 zu greifen und die gesamte Anordnung an diesen zu führen.

Bei dem Ausführungsbeispiel der Fig. 10 sind die Flanschbereiche 12, 13 in Art einer "Schwalbenschwanzführung" ausge-bildet, sie umfassen abgeschrägte Führungsflächen 21, 22, in welche keilförmige Eingriffselemente 10, 11 einschiebbar sind.

Mit dem Bezugszeichen 23 ist in Fig. 10 der Schweißbereich oder Fügebereich dargestellt.

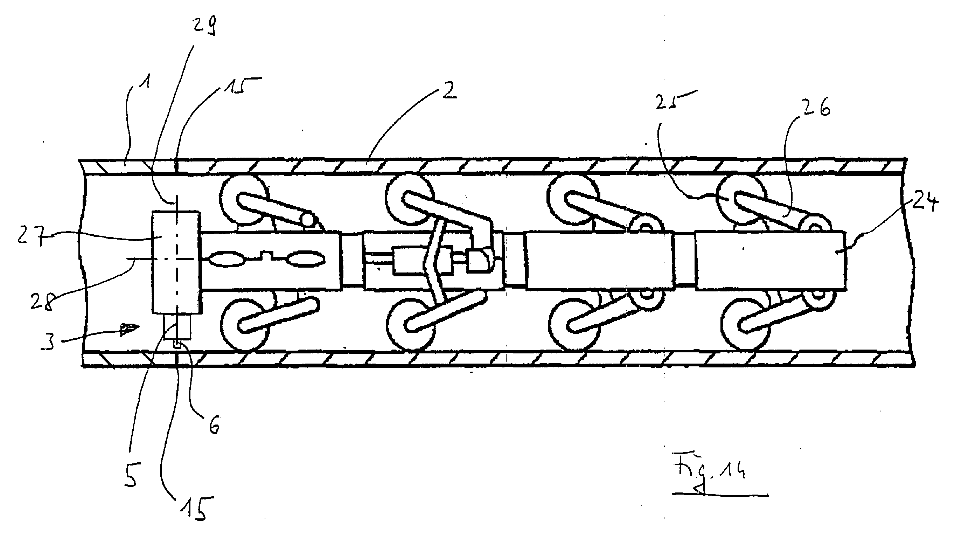

Die Fig. 11 bis 13 zeigen eine weitere Variante, bei welcher die Flanschbereiche 12, 13 durch Umformen der freien Enden der Rohrelemente 1, 2 gebildet werden, um eine nachfolgende Verschweißung zu ermöglichen. Die Flanschbereiche 12, 13 dienen sowohl der Führung als auch zur Erzeugung einer ausreichend dicken Wandschicht der Rohrelemente.

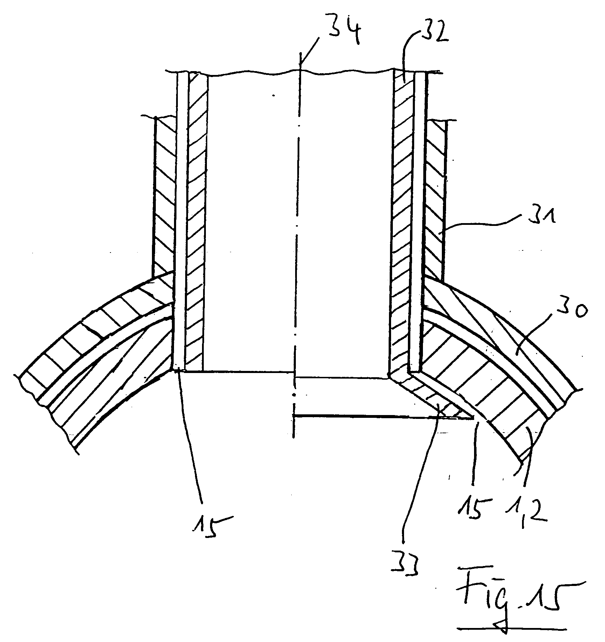

Die Fig. 14 zeigt in schematischer Seiten-Schnittansicht zwei coaxial miteinander zu verbindende Rohrelemente 1, 2, die an der Fuge 15 aneinander liegen und dort verschweißt werden sollen.

In dem Rohrelement 2 ist ein Rohrroboter 24 angeordnet, welcher im gezeigten Ausführungsbeispiel aus vier gelenkig miteinander verbundenen Teilkörpern besteht. Diese sind jeweils mit Rädern 25 versehen, welche drehbar und angetrieben an Radträgern 26 lagern, welche wiederum zu den einzelnen Elementen des Rohrroboters 24 verschwenkbar sind. Auf diese Weise ist eine Anpassung an unterschiedliche Durchmesser des Rohrelements 2 möglich. Gleichzeitig ist eine Vorschub- bzw. Rückfahrbewegung möglich. Es versteht sich, dass die Ausgestaltung des Rohrroboters 24 im Rahmen der Erfindung in weitem Bereich verändert werden kann. Erfindungsgemäß können übliche Rohrroboter eingesetzt werden, die hinsichtlich ihrer Dimensionierung, ihres Antriebs etc., den Anforderungen angepasst werden können.

Bei dem gezeigten Ausführungsbeispiel ist am vorderen Ende des vorderen Elements des Rohrroboters 24 ein Träger 27 angeordnet, welcher um eine zentrische Achse 28 drehbar ist. Die Achse 28 ist bevorzugter Weise zentrisch zu dem Rohrelement 2 bzw. zu dem ebenfalls axial angeordneten Rohrelement 1 sowie zusätzlich zentrisch zu dem Rohrroboter 24 angeordnet. Der Träger 27 ist mittels eines nicht dargestellten Antriebs so um die Achse 28 schwenkbar, dass eine Kreisbewegung entlang der Fuge 15 möglich ist.

An dem Träger 27 ist, wie schematisch dargestellt, drehbar ein Trägerdorn 5 gelagert. Der Drehantrieb sowie eine Vorrichtung zum Vorspannen des Trägerdorns 5 sind nicht gezeigt. Die Vorrichtung zum Vorspannen kann beispielsweise analog der Ausführung der Fig. 8 (Kolben-Zylinder-Einheit) oder analog der Vorrichtung gemäß Fig. 7 (Federvorspannung) ausgebildet sein. Die Darstellung der Fig. 14 zeigt den Trägerdorn 15 in einer zurückgezogenen Position, in welcher er nicht gegen die Wandung der Rohrelemente 1, 2 anliegt. Hierdurch ist auch der Führungszapfen 6 sichtbar, der an der freien Endfläche des Trägerdorns 5 angeordnet ist.

Die Arbeitsweise des in Fig. 14 gezeigten Rohrroboters ist so, dass dieser entlang des Rohrelements 2 so verfahren wird, dass sich die Achse 29, um welche sich der Trägerdorn 5 dreht, fluchtend zu der Ebene der Fuge 15 befindet. Daraufhin wird der Trägerdorn 5, zusammen mit dem Führungszapfen 6, mittels der nicht gezeigten Antriebseinrichtung in schnelle Drehung um die Achse 29 versetzt. Gleichzeitig wird der Trägerdorn 5 nach vorne verfahren, sodass er gegen die Wandung der Rohrelemente 1, 2 anliegt. Nunmehr erfolgt eine Drehung des Trägers 27 um die Achse 28. Hierdurch fährt der Trägerdorn 5 (der einen Teil des Reibschweißdorns 3 bildet) längs der Fuge 15 am Umfang der Rohrelemente 1, 2 vorbei und verschweißt diese.

Es versteht sich, dass der Rohrroboter 24 mit geeigneten Kamera- und Sensormitteln ausgestattet ist, um eine exakte Positionierung des Reibschweißdorns 3 zu ermöglichlen. Nach Beendung des Reibschweißvorgangs (Drehung des Trägers 27 um 360° um die Achse 28) wird der Reibschweißdorns 3 wieder etwas zurückgezogen und von der Wandung der Rohrelemente 1, 2 gelöst. Nachfolgend kann der Rohrroboter 24 verfahren werden.

Die Fig. 15 zeigt in schematischer Weise einen Teilschnitt durch ein Rohrelement 1 bzw. 2, welches in ein zu sanierendes Kanalrohr 30 eingeschoben ist. Im Bereich eines Hausanschlussrohrs 31 ist das Rohrelement 1, 2 ausgefräst, so wie dies aus dem Stand der Technik üblich ist. In das Hausanschlussrohr 31 ist ein thermoplastisches Rohrelement 32 eingesetzt. Die Fig. 15 zeigt zwei unterschiedliche Ausgestaltungsformen. Bei der linken Bildhälfte ist das Rohrelement 32 bündig mit der Ausfräsung des Rohrelements 1, 2 ausgebildet, während bei der rechten Bildhälfte der Fig. 15 das Rohrelement 32 mit einem Flansch 33 versehen ist. In beiden Fällen ergibt sich eine ringförmige Fuge 15, die mittels der erfindungsgemäßen Vorrichtung, d.h. mittels des Reibschweißdorns 3 zu verschweißen ist. Hierbei muss der Reibschweißdorn auf einer Kreisbahn um die Mittelachse 34 des Rohrelements 32 längs der Fuge 15 bewegt werden. Hierzu benötigt der Rohrroboter 24 an dem Träger 27 einen weiteren Aufsatz, der hinsichtlich seiner Achse zu der Mittelachse 34 positioniert ist und dementsprechend den Reibschweißdorn 3 auf der Kreisbahn längs der Fuge 15 bewegt. Es versteht sich, dass bei entsprechender Konstruktion auch schräge oder geneigte Hausanschlüsse in Rohrelemente eingeschweißt werden können.

## Patentansprüche

1. Vorrichtung zum Verschweißen von thermoplastischen Rohrelementen (1, 2) mittels eines Reibschweißverfahrens, mit einem innerhalb eines Rohres verfahrbaren Rohrroboter (24) mit einer Antriebseinheit für einen Reibschweißdorn, mit einer Steuereinheit zur Bewegung des Reibschweißdorns (3) entlang einer Innenwandung eines Rohrs sowie mit einer Anpresseinrichtung (4) zur Anlage des Reibschweißdorns (3) an die zu verschweißende Rohrwandung.

2. Vorrichtung nach Anspruch 1, **dadurch gekennzeichnet, dass** der Reibschweißdorns (3) einen drehbar gelagerten Trägerdorn (5) mit einem Führungszapfen (6) umfasst.

3. Vorrichtung nach Anspruch 2, **dadurch gekennzeichnet, dass** der Trägerdorn (5) mittels einer Kolben-Zylinder-Einheit (7) gegen die zu verschweißende Rohrwandung vorspannbar ist.

4. Vorrichtung nach Anspruch 2, **dadurch gekennzeichnet, dass** der Trägerdorn (5) mittels einer Federeinheit (8) gegen die zu verschweißende Rohrwandung vorspannbar ist.

5. Vorrichtung nach einem der Ansprüche 1 bis 4, **dadurch gekennzeichnet, dass** der Reibschweißdorn (3) an einer Führungseinheit (9) gelagert ist, welche mit Eingriffselementen (10, 11) versehen ist, welche mit einem Flanschbereich (12, 13) des jeweiligen Rohrelements (1, 2) in Eingriff bringbar sind.
